# FASCICULE DE BREVET EUROPEEN

(11) **EP 2 780 527 B1**
(45) Date de publication et mention de la délivrance du brevet: **12.06.2019**
(21) Numéro de dépôt: 12795529.2
(22) Date de dépôt: 13.11.2012
(51) Int. Cl.: E06B 3/54, E06B 3/66, B32B 17/10, A47F 3/04

(54) **VITRAGE ISOLANT BOMBÉ À FROID**
KALTGEBOGENE ISOLIERVERGLASUNG
COLD BENT INSULATING GLAZING

(30) Priorité: 17.11.2011 FR 1160473
(43) Date de publication de la demande: 24.09.2014
(73) Titulaire: Saint-Gobain Glass France, 92400 Courbevoie (FR)
(72) Inventeur: LEVASSEUR, Fabien, F-59200 Tourcoing (FR); DECOURCELLE, Romain, F-60200 Compiegne (FR)
(74) Mandataire: Saint-Gobain Recherche
(86) Numéro de dépôt international: PCT/FR2012/052608
(87) Numéro de publication internationale: WO 2013/072612

(56) Documents cités:
- EP-A- 0 282 468
- WO-A-98/01649
- WO-A2-2008/107612
- DE-A1- 10 024 525
- DE-A1- 19 519 504
- DE-A1-102008 031 770
- FR-A- 2 676 049
- NL-C- 1 029 935
- US-A- 4 723 386

## Description

L'invention concerne un module vitré comprenant un panneau du type vitrage isolant bombé à froid et un procédé pour le bombage à froid d'un panneau du type vitrage isolant, pouvant notamment comprendre un vitrage feuilleté.

Un vitrage isolant, également appelé vitrage multiple, comprend plusieurs vitrages séparés par une lame de gaz (argon, krypton, air, etc.) éventuellement sous pression réduite. Il peut s'agir d'un vitrage double s'il ne comprend qu'une seule lame de gaz séparant deux vitrages. Il peut s'agir d'un vitrage triple s'il comprend deux lames de gaz et trois vitrages chaque lame de gaz séparant deux des vitrages.

Un substrat verrier comprend une seule feuille de verre minéral, le cas échéant recouverte d'une ou plusieurs couches minces du type antireflet, antisolaire, anti-abrasion, etc. Un substrat verrier d'un vitrage isolant peut faire partie d'un vitrage feuilleté. Un vitrage isolant peut être composé exclusivement de vitrages feuilletés séparés par une lame de gaz. Dans tous les cas, un vitrage isolant comprend au moins une lame de gaz séparant deux substrats verriers, chacun de ces substrats verriers pouvant, le cas échéant, faire partie d'un vitrage feuilleté.

Un vitrage feuilleté comprend plusieurs substrats verriers séparés par un intercalaire en matériau polymère. La réalisation de vitrages feuilletés ou isolants plans est bien maitrisée. La réalisation de vitrages feuilletés bombés est beaucoup plus délicate et d'autant plus délicate que les courbures à conférer sont importantes. Si les courbures sont élevées, le bombage à chaud au préalable des feuilles de verre alors que le verre est ramolli (à plus de 500°C en général) peut être nécessaire. Si les courbures d'un vitrage sont peu importantes, on peut envisager de le bomber à froid après la fin de sa fabrication. L'expression « bombage à froid » signifie généralement à moins de 200°C, température à laquelle le verre n'est pas ramolli. Dans le cadre de la présente demande, « bombage à froid » signifie « à moins de 200°C ».

Le WO98/01649 enseigne le bombage à froid d'un vitrage feuilleté.

Le EP282468 enseigne le bombage entre 80 et 140°C d'un vitrage feuilleté comprenant un substrat verrier trempé. Le chauffage entre 80 et 140°C sert à ramollir le PVB intercalaire du vitrage feuilleté. Cependant, le bombage d'un vitrage feuilleté au-dessus de 80°C conduit à un vieillissement inacceptable de l'intercalaire en matériau polymère qui se traduit par la formation de bulles fines mais visibles à l'oeil nu et par ailleurs que l'on pouvait avantageusement réaliser le bombage à froid entre 30 et 80°C pour réduire les efforts nécessaires au bombage ainsi que les contraintes de cisaillement entre l'intercalaire en matériau polymère et les substrats verriers et ainsi réduire les risques de délaminage.

Les FR2676049 et DE102008031770 enseignent l'assemblage d'un vitrage feuilleté par un PVB, les feuilles de verre étant cintrées pendant l'opération d'assemblage. C'est donc le PVB qui maintient le cintrage du vitrage feuilleté.

Le DE19519504 enseigne le bombage d'un vitrage feuilleté à 130°C.

Le WO2008107612 enseigne un vitrage isolant intégrant une vitre bombée avant assemblage du vitrage isolant.

On a maintenant découvert que le bombage à froid d'un vitrage isolant était possible, malgré le fait qu'il soit déjà assemblé. Ce bombage est notamment possible à moins de 30°C, par exemple entre 0 et 30°C, notamment entre 5 et 28°C. Un tel bombage est également réalisable entre 30 et 80°C, notamment entre 30 et 50°C. Ceci signifie qu'il est possible de réaliser le bombage d'un vitrage isolant à la température ambiante dans pratiquement n'importe quel pays. On peut donc généralement réaliser le bombage selon l'invention sans apporter de chaleur au vitrage et sans faire monter sa température par rapport à celle de l'air ambiant.

De façon surprenante, la déformation par bombage selon l'invention d'un vitrage isolant (généralement plan avant d'être bombé) est possible sans que cela ne produise une détérioration de la barrière de scellement (« water tight barrier » en anglais) du vitrage. Cette barrière de scellement comprend les éléments encadrant le vitrage et séparant différents substrats verriers du vitrage isolant pour ménager l'espace nécessaire à la lame de gaz. De façon connue de l'homme du métier, ces éléments comprennent un intercalaire creux (également appelé cadre d'écartement ou cadre espaceur ou baguette d'écartement), profilé pouvant être en aluminium ou en acier ou en polymère (notamment en « Luran ») contenant un absorbeur d'eau, ainsi qu'un joint extérieur en polymère (silicone, PU, polysulfure), ces deux éléments étant placés dans l'épaisseur de la lame de gaz. L'intercalaire creux est collé aux substrats verrier qu'il sépare par une colle dite butyle.

Les rayons de courbure conférés au vitrage isolant par le procédé selon l'invention peuvent atteindre 5 mètres. Ainsi, le vitrage isolant peut être bombé pour que sa surface présente en au moins un point un rayon de courbure dans au moins une direction compris entre 5 et 20 m. Le cas échéant, dans le cas d'un bombage du type cylindrique, la surface pourra avoir en un tel point un tel rayon de courbure dans une direction et aucune courbure (rayon de courbure infini) orthogonalement à ladite direction. Si le vitrage isolant comprend un vitrage feuilleté, alors, de préférence, on bombe le vitrage de sorte que sa surface ne présente en aucun point un rayon de courbure inférieur à 6m. En effet, un tel rayon de courbure représente une limite en termes de durabilité pour un vitrage feuilleté.

Selon l'invention, le vitrage isolant peut comprendre un vitrage feuilleté voire plusieurs vitrages feuilletés. Notamment, le vitrage isolant peut ne comprendre que des vitrages feuilletés. Notamment, le vitrage isolant peut être constitué de deux vitrages feuilletés séparés par une lame de gaz, chaque vitrage feuilleté comprenant deux feuilles de verre séparées par un intercalaire en matériau polymère. Dans ce vitrage isolant, chaque vitrage feuilleté est généralement du type verre trempé/PVB/verre trempé : 6/4/6 mm, les deux vitrages feuilletés étant séparés par une lame de gaz de 16 mm.

Pour le cas où le vitrage isolant comprend un vitrage feuilleté, le bombage peut être réalisé sous 30°C, notamment entre 0 et 30°C, ou au-dessus de 30°C. Notamment, le vitrage isolant comprenant un vitrage feuilleté peut être réalisé à la température ambiante, sans qu'il ne soit nécessaire de le chauffer. Cependant, un vitrage isolant selon l'invention comprenant un vitrage feuilleté est de préférence bombé entre 30 et 80°C, une température au-dessus de 40°C étant particulièrement satisfaisante. Une température en-dessous de 75°C convient généralement. Le domaine de température entre 40 et 75°C est particulièrement adapté lorsque le vitrage isolant comprend un vitrage feuilleté. Pour réaliser ce procédé, en pratique, on part d'un vitrage isolant plan que l'on chauffe jusqu'à ce que l'intercalaire du vitrage feuilleté atteigne le domaine de température préconisé (température de bombage), puis on bombe le vitrage isolant. De préférence, on chauffe le vitrage isolant au-dessus de la température de transition vitreuse de l'intercalaire en matériau polymère. La température de transition vitreuse est déterminée par viscoanalyse avec mesures en cinétique. Le fait de chauffer au-dessus de la transition vitreuse est favorable au fluage du matériau polymère pendant le bombage, ce qui a pour conséquence que les contraintes permanentes de cisaillement aux interfaces entre ledit matériau et les substrats verriers sont réduites. L'intercalaire en matériau polymère peut notamment être un polyvinyle de butyral (dit « PVB »), un éthylène-acétate de vinyle ou un film de résine ionomère, notamment le SentryGlas commercialisé par DuPont. Pour le cas d'une résine ionomère, on préfère chauffer le vitrage isolant à plus de 45°C.

Ainsi, l'invention concerne notamment un procédé de préparation d'un module vitré bombé comprenant une armature métallique et un panneau du type vitrage isolant comprenant un vitrage feuilleté, ledit vitrage feuilleté comprenant des substrats verriers séparés par un intercalaire en matériau polymère, le panneau étant bombé après assemblage du vitrage feuilleté, par une force lui faisant prendre la forme de l'armature métallique, puis maintenu dans cette forme par un moyen de maintien, le bombage étant réalisé alors que l'intercalaire est à une température comprise entre 30 et 80°C, notamment alors que l'intercalaire est à une température supérieure à 40°C, notamment alors que l'intercalaire est à une température inférieure à 75°C. De préférence, le bombage est réalisé alors que l'intercalaire (notamment en PVB) est à une température supérieure à sa température de transition vitreuse pendant le bombage.

Pour chauffer le vitrage isolant, notamment entre 30 et 80°C, on peut très facilement opérer en juxtaposant un élément chauffant comme par exemple une couverture chauffante au vitrage isolant. Comme couverture chauffante, on peut notamment utiliser celles commercialisées par la société Vulcanic. On peut simplement recouvrir le vitrage isolant par l'élément chauffant jusqu'à obtention de la température souhaitée et procéder au bombage. On peut laisser l'élément chauffant juxtaposé au vitrage isolant pendant le bombage. On peut mettre à chauffer un vitrage isolant par l'élément chauffant pendant que l'on procède au bombage d'un autre vitrage isolant venant d'être chauffé. Bien entendu, en fonction de la nature du vitrage isolant et de ses dimensions (faces principales et épaisseur), l'homme du métier sait trouver les conditions de chauffage, de durée et de vitesse concernant chaque opération afin d'optimiser le procédé.

Le procédé selon l'invention est adapté au bombage à froid des vitrages isolants ne comprenant aucun vitrage feuilleté ou comprenant un, voire deux vitrages feuilletés, voire plus. Si le vitrage isolant ne comprend pas de vitrage feuilleté, alors il est généralement constitué de substrats verriers comprenant chacun une seule feuille de verre séparés par une lame de gaz. Il peut notamment s'agir du vitrage isolant très classique équipant les immeubles d'habitation, du type 4x16x4 mm (deux substrats verrier de 4 mm séparés par une lame de gaz de 16 mm). Un tel vitrage peut être bombé à la température ambiante.

Toutes les feuilles de verre contenues dans le vitrage isolant peuvent être trempées. L'invention est particulièrement adaptée au bombage à froid d'un vitrage isolant comprenant deux vitrages feuilletés séparés par une lame de gaz, chaque vitrage feuilleté comprenant deux feuilles de verre trempées séparées par un intercalaire en matériau polymère. Dans ce vitrage isolant, chaque vitrage feuilleté est généralement du type verre trempé/PVB/verre trempé : 6/4/6 mm, les deux vitrages feuilletés étant séparés par une lame de gaz de 16 mm.

Notamment l'invention est particulièrement utile pour la réalisation de vitrages isolants devant être montés sur des bâtiments dont des vitrages doivent apparaître courbés. Ces bâtiments, notamment du type tours de quartiers d'affaire peuvent avoir des formes particulièrement audacieuses et nécessiter la réalisation de vitrages isolants courbés dont les formes peuvent varier pour un même bâtiment.

Ainsi, l'invention concerne également un procédé de préparation d'un module vitré bombé comprenant une armature métallique et un vitrage isolant comprenant des substrats verriers séparés par une lame de gaz, le vitrage isolant étant bombé à froid (c'est-à-dire à moins de 200°C) après son assemblage avec une barrière de scellement, par une force lui faisant prendre la forme de l'armature métallique, puis maintenu dans cette forme bombée par un moyen de maintien. Ainsi, le vitrage isolant est bombé après que son assemblage soit totalement terminé. Notamment, si un constituant résineux utilisé pour la barrière de scellement prend plusieurs jours pour être bien polymérisés et le bombage à froid intervient après ce délai.

On réalise des modules comprenant le vitrage isolant et une armature métallique capable de maintenir en forme le vitrage isolant bombé à froid et faisant donc office de moule. Cette armature métallique est généralement en acier ou en aluminium extrudé. Pour ce faire, on amène le vitrage isolant au contact de l'armature métallique et on applique une force au vitrage isolant en un ou plusieurs points pour lui faire prendre la forme de l'armature. Les forces appliquées peuvent aller par exemple jusqu'à 200 kg par point d'appui. Pour réaliser cette déformation du vitrage isolant, on peut utiliser des tirants, des vérins hydrauliques, des poids, des robots. Le vitrage isolant est maintenu en forme sur l'armature par un moyen de maintien comme des pinces ou par une colle, selon le rayon de courbure à maintenir. Bien entendu, s'il s'agit d'un collage, on attend que la colle ait bien pris (par polymérisation, réticulation, etc) avant d'enlever la force d'application du vitrage isolant à l'armature. Une colle structurelle adaptée est par exemple celle du type silicone commercialisée par Dow Corning sous la référence DC 3362. Si la courbure à maintenir est importante (faible rayon de courbure), l'usage de pinces peut s'imposer. On peut aussi déformer le vitrage isolant sur l'armature en appliquant au vitrage un profilé l'encadrant et en vissant des vis resserrant la distance entre le profilé et l'armature. En vissant progressivement, le vitrage isolant prend la forme de l'armature. En fin de vissage, le vitrage isolant a pris la forme de l'armature et est maintenu en forme grâce au profilé vissé sur l'armature. Le moyen de maintien comprend ici le profilé et ses vis. Grâce à l'invention, l'opération de bombage elle-même (entre le début de la déformation et la fin de la déformation du vitrage isolant) peut être rapide, notamment entre 10 et 120 secondes. Le cas échéant, on peut préchauffer le vitrage isolant, notamment entre 30 et 80°C, notamment en le déposant sur une couverture chauffante, avant de le bomber comme il vient d'être dit.

La déformation « à froid » du vitrage isolant ne doit pas être réalisée en générant des contraintes inadmissibles dans les feuilles de verre le composant. Ainsi, la contrainte maximale permanente autorisée dans le bâtiment pour un verre non trempé est de 10 MPa. La contrainte maximale permanente autorisée dans le bâtiment pour un verre trempé est 40 MPa. Selon les courbures à conférer au vitrage isolant, on peut donc avoir intérêt à utiliser des feuilles de verre au moins durcies, voire trempées.

Notamment, le vitrage isolant peut être bombé simultanément selon deux directions différentes (twisted glass).

Les vitrages isolants concernés par l'invention peuvent être grands puisqu'ils peuvent avoir une face principale d'aire supérieure à 3 m² et même supérieure à 4 m² et même supérieure à 5 m². Notons qu'un vitrage isolant (ainsi qu'une feuille ou un vitrage) comprend deux faces principales et une tranche.
Il convient lors du bombage de ne pas dépasser les contraintes maximales admissibles du vitrage en utilisation. Pour le cas où le vitrage isolant comprend un vitrage feuilleté, un élément critique limitant l'amplitude du bombage est la contrainte de cisaillement aux interfaces entre l'intercalaire en matériau polymère et les substrats verriers qui lui sont juxtaposés. De préférence, cette contrainte à 20°C reste inférieure à 3 MPa et de préférence inférieure à 2 MPa et de manière encore préférée inférieure à 1,5 MPa lors du bombage. Si l'on chauffe l'intercalaire en matériau polymère à plus de 30°C, la contrainte de cisaillement aux interfaces subie pendant le bombage est bien inférieure à celle pouvant être subie en utilisation lorsque les températures ambiantes baissent. C'est pourquoi avant de réaliser le bombage, il convient par des tests de routine de déterminer si le bombage prévu n'excède pas la contrainte de cisaillement aux interfaces entre l'intercalaire en matériau polymère et les substrats verriers à 20°C. Cette expertise peut être réalisée très simplement par la méthode ci-après décrite. Selon cette méthode, on peut visualiser ces contraintes de cisaillement en juxtaposant au vitrage feuilleté un film polarisant sur l'une de ses faces principales. Après avoir disposé ce film polarisant sur un échantillon du vitrage feuilleté, on procède à un test de traction en tirant d'un côté sur l'un des substrats verriers et de l'autre sur l'autre substrat verrier. L'apparition des contraintes se traduit par une coloration en transmission. La coloration évolue avec l'intensité des contraintes. Il suffit donc de repérer la couleur correspondant à la contrainte maximale autorisé selon le cas (3 ou 2 ou 1,5 ou 1 MPa, ou autre). Cet étalonnage peut être réalisé avec un seul film polarisant juxtaposé à une face principale du vitrage feuilleté. Dans ce cas, il convient d'observer la coloration avec un angle de vision d'environ 45° (angle entre la normale au vitrage et la direction de la vision). On peut aussi placer un film sur chacune des faces principales du vitrage feuilleté, auquel cas on peut visualiser les contraintes avec n'importe quel angle d'observation. Après réalisation de l'étalonnage (pour un intercalaire en matériau polymère donné et une épaisseur donnée dudit intercalaire), on peut facilement vérifier en production des vitrages (même sur des vitrages isolants) que les contraintes de cisaillement maximales ne sont pas dépassées en apposant un film polarisant sur une face principale du vitrage ou deux films polarisants, un sur chacune des faces principales du vitrage. Ainsi, après bombage et retour de l'intercalaire à la température de 20 °C, on peut évaluer l'état des contraintes de cisaillement aux interfaces entre l'intercalaire en matériau polymère et les substrats verriers situés de part et d'autre du matériau polymère en lui étant juxtaposés en appliquant un film polarisant sur une face principale du vitrage isolant puis en visualisant la couleur transmise au travers du vitrage isolant et du film. On peut ensuite comparer cette couleur avec les couleurs de l'étalonnage préalablement réalisé afin d'évaluer les contraintes de cisaillement aux interfaces entre l'intercalaire en matériau polymère et lesdits substrats verriers et, selon le résultat de cette comparaison, décider de la conformité du module par rapport au cahier des charges, c'est-à-dire valider ou mettre au rebut le module.

L'invention concerne également le module vitré réalisé selon le procédé de l'invention. Ce module comprend une armature métallique et un vitrage isolant, ledit vitrage isolant ayant été bombé à froid. Comme tout vitrage isolant, le vitrage isolant selon l'invention et bombé à froid selon l'invention comprend toujours (dans tous les modes de réalisation) une barrière de scellement. Comme tout vitrage isolant, le vitrage isolant selon l'invention et bombé à froid selon l'invention comprend toujours (dans tous les modes de réalisation) une lame de gaz (c'est-à-dire au moins une lame de gaz) séparant deux substrats verriers. La présente demande s'applique aux vitrages isolants comprenant une barrière de scellement et une lame de gaz, lesdits vitrages isolants étant bombés à froid selon l'invention après leur montage avec la barrière de scellement. Dans tous les cas, le bombage à froid selon l'invention est donc aussi appliqué à la barrière de scellement. L'armature métallique et le vitrage isolant sont solidarisés par un moyen de maintien forçant le vitrage isolant à garder sa forme bombée que lui confère l'armature. Ainsi, le module comprend également un moyen de maintien de la forme bombée du vitrage. Si l'on enlève le moyen de maintien, alors le vitrage isolant revient à sa forme d'origine avant bombage (généralement une forme plane), dès lors que le bombage à froid a été réalisé dans le domaine de déformation élastique de tous les composants du vitrage isolant (y compris la barrière de scellement), ce qui est recommandé.

La figure 1 représente un dispositif permettant d'appliquer des déformations à un vitrage et de mesurer les contraintes subies.

La figure 2 représente la somme des valeurs absolues des forces mesurées dans deux cas de températures (20 et 70°C) et en fonction de la flèche imposée à un vitrage feuilleté par le dispositif de la figure 1.

La figure 3 montre l'évolution avec le temps de la somme des valeurs absolues des forces dans deux cas de températures d'application de déformations (20 et 70°C).

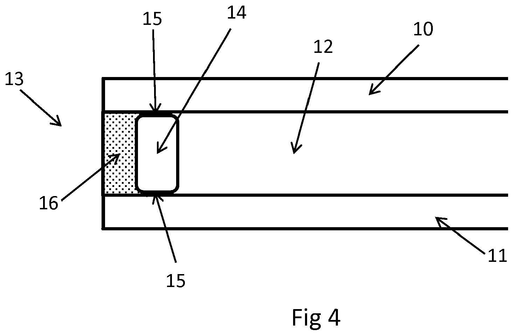

La figure 4 illustre la structure du bord d'un vitrage isolant, bien connue de l'homme du métier. Les deux substrats verriers 10 et 11 sont séparés par une lame de gaz 12. La barrière de scellement 13 isole la lame de gaz 12 de l'extérieur. La barrière de scellement comprend un intercalaire creux (ou cadre d'écartement) 14 collé aux substrats verriers 10 et 11 par une colle 15 butyle et un joint extérieur 16 en polymère fait tout le tour du vitrage isolant.

### EXEMPLE 1

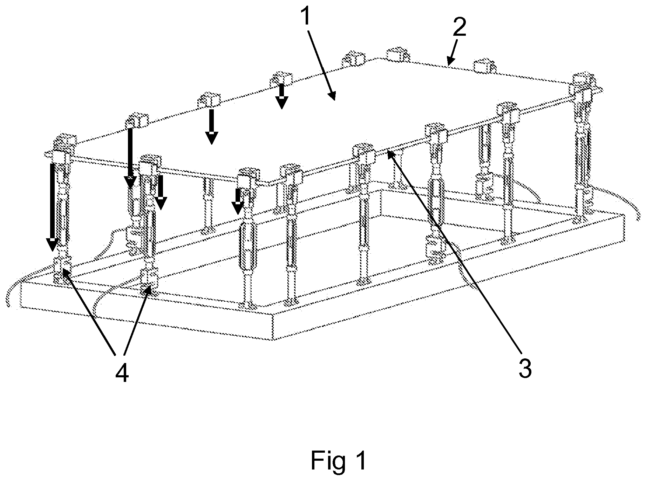

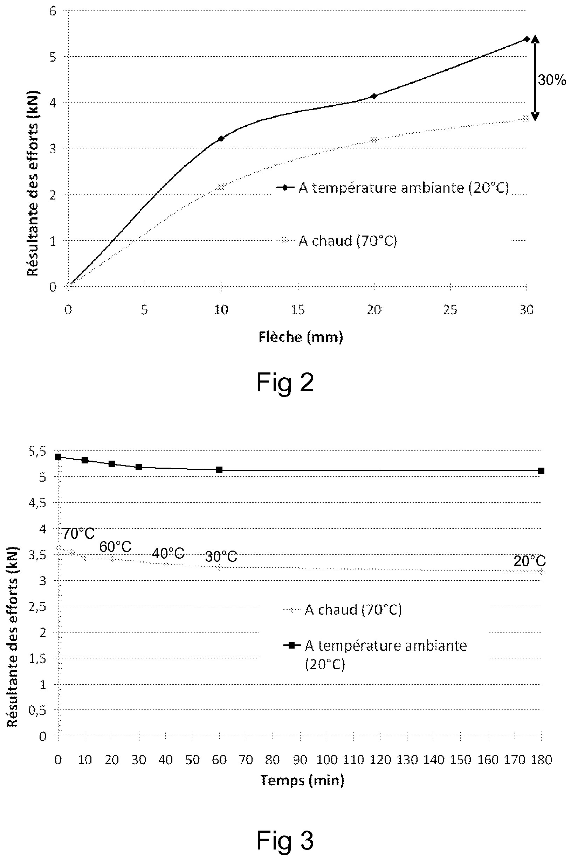

On fabrique un vitrage feuilleté trempé en associant 2 vitrages monolithiques trempés chacun à 120 MPa de mise en compression des peaux, chaque vitrage ayant des dimensions de 1938x876x8 mm, avec 4 intercalaires de PVB (4 fois 0,38 mm d'épaisseur de PVB). Le vitrage est ensuite soumis à une déformation comme représenté par la figure 1. On maintient une largeur 2 et une longueur 3 fixes du vitrage 1 et on applique des déplacements sur les côtés non maintenus fixes comme représenté sur la figure 1 par des vecteurs verticaux dirigés vers le bas. Ceci a été réalisé après avoir porté le vitrage assemblé aux températures de 20°C dans un cas et 70°C dans un autre cas. Des capteurs de force 4 placés sous les tirants exerçant les déplacements, permettent de mesurer les forces appliquées en différents points de la périphérie du vitrage. En certains endroits les forces sont en traction et en d'autres endroits les forces sont en compression, de sorte que la résultante est nulle. On apprécie donc les efforts supportés par le vitrage en additionnant les valeurs absolues des forces. La figure 2 représente la somme des valeurs absolues des forces mesurées dans les deux cas de températures et en fonction de la flèche. On voit que le chauffage à 70°C permet une réduction des efforts de l'ordre de 30%. La figure 3 montre l'évolution de la somme des valeurs absolues des forces en fonction du temps, sachant que pour l'essai avec préchauffage à 70°, le vitrage est immédiatement remis à l'air ambiant à 20°C. On a indiqué en fonction du temps la baisse de température du vitrage entre 70 et 20°C. On voit que la résultante des forces reste bien inférieure dans le cas du préchauffage à 70°C, le gain de 30% étant conservé et même amélioré si l'on compare le vitrage déformé à 20°C et celui déformé à 70°C et revenu à 20°C. L'intercalaire dans le cas du préchauffage à 70°C va en conséquence mieux vieillir, avoir moins tendance à se délaminer et avoir moins tendance à blanchir. Ce vitrage feuilleté peut être intégré dans un vitrage isolant, ce dernier pouvant être bombé à froid.

### EXEMPLE 2

On décrit dans cet exemple la réalisation d'un vitrage isolant associant un vitrage feuilleté et un vitrage trempé. Le vitrage feuilleté associait deux feuilles de verre de 1,4m x 0,7m de 6 mm chacune d'épaisseur, assemblés avec 4 épaisseurs de 0,38mm de PVB. Le verre trempé était de dimension 1,4m x 0,7m avec une épaisseur de 8 mm. Ce vitrage feuilleté et ce vitrage trempé ont été assemblés dans un vitrage isolant comprenant une lame d'argon de 16 mm avec une barrière de scellement comprenant un cadre espaceur collé au verre avec une résine butyle, un cordon en silicone faisant tout le tour du vitrage isolant entre le cadre espaceur et l'extérieur du vitrage. L'ensemble est laissé polymériser à l'air libre pendant 15 jours. On place ensuite le vitrage sur une armature métallique de forme cylindrique (courbée dans une direction mais pas perpendiculairement à cette direction) dont le rayon de courbure était 15m. On fait prendre la forme de l'armature au vitrage et l'on maintient cette forme grâce à un profilé métallique que l'on visse sur l'armature. Ce bombage a été réalisé à 20°C. Le vitrage isolant supporte bien le bombage du fait qu'il est exercé dans le domaine élastique de tous ses composants.

## Revendications

1. Module vitré comprenant une armature métallique et un vitrage isolant bombé à froid, ledit vitrage isolant comprenant une barrière de scellement, l'armature métallique et le vitrage isolant étant solidarisés par un moyen de maintien forçant le vitrage isolant à garder la forme bombée que lui confère l'armature.

2. Module selon la revendication précédente, **caractérisé en ce que** le vitrage isolant comprend un vitrage feuilleté comprenant des substrats verriers séparés par un intercalaire en matériau polymère, notamment un PVB.

3. Module selon l'une des revendications précédentes, **caractérisé en ce que** le vitrage isolant comprend deux vitrages feuilletés séparés par une lame de gaz.

4. Module selon l'une des revendications précédentes, **caractérisé en ce qu'**au moins un substrat verrier du vitrage isolant comprend une feuille de verre trempé.

5. Module selon l'une des revendications précédentes, **caractérisé en ce que** le vitrage isolant a une face principale d'aire supérieure à 3 m², voire supérieure à 4 m², voire supérieure à 5 m².

6. Module selon l'une des revendications précédentes, **caractérisé en ce que** le vitrage isolant est bombé pour que sa surface présente en au moins un point un rayon de courbure compris entre 5 et 20 m dans au moins une direction.

7. Module selon la revendication 1, **caractérisé en ce que** le vitrage isolant est constitué de substrats verriers comprenant chacun une seule feuille de verre séparés par une lame de gaz et ne comprend pas de vitrage feuilleté.

8. Procédé de préparation d'un module vitré de l'une des revendications 1 à 6, le vitrage isolant étant bombé à froid par une force lui faisant prendre la forme de l'armature métallique, puis maintenu dans cette forme bombée par un moyen de maintien.

9. Procédé selon la revendication précédente, **caractérisé en ce que** le bombage est réalisé à moins de 30°C.

10. Procédé selon la revendication précédente, **caractérisé en ce que** le bombage est réalisé à moins de 28°C.

11. Procédé selon l'une des revendications de procédé précédentes, **caractérisé en ce que** le bombage est réalisé à plus de 0°C.

12. Procédé selon l'une des revendications de procédé précédentes, **caractérisé en ce que** le bombage est réalisé alors que le vitrage isolant est à la même température que l'air ambiant.

13. Procédé selon la revendication 8, **caractérisé en ce que** le vitrage isolant comprend un vitrage feuilleté comprenant des substrats verriers séparés par un intercalaire en matériau polymère, notamment un PVB.

14. Procédé selon la revendication précédente, **caractérisé en ce que** le bombage est réalisé alors que l'intercalaire est à une température comprise entre 30 et 80°C.

15. Procédé selon la revendication précédente, **caractérisé en ce que** le bombage est réalisé alors que l'intercalaire est à une température comprise entre 40°C et 75°C.

16. Procédé selon l'une des trois revendications précédentes, **caractérisé en ce que** l'intercalaire est à une température supérieure à sa température de transition vitreuse pendant le bombage.

17. Procédé selon l'une des revendications 13 à 16, **caractérisé en ce que** le vitrage isolant est chauffé pour l'obtention de la température de bombage, le chauffage étant réalisé en lui juxtaposant un élément chauffant, notamment une couverture chauffante.

18. Procédé selon la revendication 13, **caractérisé en ce que** le bombage est réalisé à la température ambiante.

19. Procédé selon l'une des revendications 13 à 18, **caractérisé en ce que** le vitrage isolant est bombé pour que la contrainte de cisaillement aux interfaces entre l'intercalaire en matériau polymère et les substrats verriers qui lui sont juxtaposés soit inférieure à 3 MPa à 20°C.

20. Procédé de préparation d'un module vitré de la revendication 7, le vitrage isolant étant bombé à froid par une force lui faisant prendre la forme de l'armature métallique, puis maintenu dans cette forme bombée par un moyen de maintien.

21. Procédé selon l'une des revendications de procédé précédentes, **caractérisé en ce que** le bombage dure entre 10 et 120 secondes.

22. Procédé selon l'une des revendications de procédé précédentes, **caractérisé en ce que** le vitrage isolant est bombé simultanément selon deux directions différentes.

23. Procédé selon l'une des revendications de procédé précédentes, **caractérisé en ce que** le vitrage isolant est plan avant d'être bombé.

## Patentansprüche

1. Verglastes Modul, das eine metallische Bewehrung und eine Isolierverglasung, die kalt gewölbt ist, umfasst, wobei die Isolierverglasung eine Versiegelungsbarriere umfasst, wobei die metallische Bewehrung und die Isolierverglasung fest durch ein Haltemittel verbunden sind, das die Isolierverglasung zwingt, die gewölbte Form, die ihr die Bewehrung verleiht, zu behalten.

2. Modul nach dem vorstehenden Anspruch, **dadurch gekennzeichnet, dass** die Isolierverglasung eine Sicherheitsverglasung umfasst, die Glassubstrate umfasst, die durch eine Einlage aus Polymermaterial, insbesondere aus einem PVB, getrennt sind.

3. Modul nach einem der vorstehenden Ansprüche, **dadurch gekennzeichnet, dass** die Isolierverglasung zwei Sicherheitsverglasungen umfasst, die durch eine Gasschicht getrennt sind.

4. Modul nach einem der vorstehenden Ansprüche, **dadurch gekennzeichnet, dass** mindestens ein Glassubstrat der Isolierverglasung eine Hartglasscheibe umfasst.

5. Modul nach einem der vorstehenden Ansprüche, **dadurch gekennzeichnet, dass** die Isolierverglasung eine Hauptseite mit einer Fläche größer als 3 m², ja sogar größer als 4 m², ja sogar größer als 5 m² aufweist.

6. Modul nach einem der vorstehenden Ansprüche, **dadurch gekennzeichnet, dass** die Isolierverglasung gewölbt ist, damit ihre Oberfläche an mindestens einem Punkt einen Krümmungsradius aufweist, der zwischen 5 und 20 m in mindestens einer Richtung liegt.

7. Modul nach Anspruch 1, **dadurch gekennzeichnet, dass** die Isolierverglasung aus Glassubstraten besteht, die jeweils eine einzige Glasscheibe umfassen, die durch eine Gasschicht getrennt sind, und keine Sicherheitsverglasung umfasst.

8. Verfahren zum Vorbereiten eines verglasten Moduls nach einem der Ansprüche 1 bis 6, wobei die Isolierverglasung kalt durch eine Kraft gewölbt wird, die sie die Form der metallischen Bewehrung annehmen lässt, dann in dieser gewölbten Form durch ein Haltemittel gehalten wird.

9. Verfahren nach dem vorstehenden Anspruch, **dadurch gekennzeichnet, dass** die Wölbung bei weniger als 30 °C hergestellt wird.

10. Verfahren nach dem vorstehenden Anspruch, **dadurch gekennzeichnet, dass** die Wölbung bei weniger als 28 °C hergestellt wird.

11. Verfahren nach einem der vorstehenden Verfahrensansprüche, **dadurch gekennzeichnet, dass** die Wölbung bei mehr als 0 °C hergestellt wird.

12. Verfahren nach einem der vorstehenden Verfahrensansprüche, **dadurch gekennzeichnet, dass** die Wölbung hergestellt wird, während die Isolierverglasung dieselbe Temperatur wie die Umgebungsluft aufweist.

13. Verfahren nach Anspruch 8, **dadurch gekennzeichnet, dass** die Isolierverglasung eine Sicherheitsverglasung umfasst, die Glassubstrate umfasst, die durch eine Einlage aus Polymermaterial, insbesondere aus einem PVB, getrennt sind.

14. Verfahren nach dem vorstehenden Anspruch, **dadurch gekennzeichnet, dass** die Wölbung hergestellt wird, während die Einlage eine Temperatur aufweist, die zwischen 30 und
80 °C liegt.

15. Verfahren nach dem vorstehenden Anspruch, **dadurch gekennzeichnet, dass** die Wölbung hergestellt wird, während die Einlage eine Temperatur aufweist, die zwischen 40 °C und 75 °C liegt.

16. Verfahren nach einem der drei vorstehenden Ansprüche, **dadurch gekennzeichnet, dass** die Einlage eine Temperatur aufweist, die höher ist als ihre Glasübergangstemperatur während des Wölbens.

17. Verfahren nach einem der Ansprüche 13 bis 16, **dadurch gekennzeichnet, dass** die Isolierverglasung für das Erhalten der Wölbungstemperatur erhitzt wird, wobei das Erhitzen ausgeführt wird, indem ein Heizelement, insbesondere eine Heizdecke, neben sie gelegt wird.

18. Verfahren nach Anspruch 13, **dadurch gekennzeichnet, dass** die Wölbung bei Umgebungstemperatur hergestellt wird.

19. Verfahren nach einem der Ansprüche 13 bis 18, **dadurch gekennzeichnet, dass** die Isolierverglasung gewölbt wird, damit die Scherspannung an den Schnittflächen zwischen der Einlage aus Polymermaterial und den Glassubstraten, die neben ihr liegen, bei 20 °C kleiner ist als 3 MPa.

20. Verfahren zum Vorbereiten eines verglasten Moduls des Anspruchs 7, wobei die Isolierverglasung kalt durch eine Kraft gewölbt wird, die sie die Form der metallischen Bewehrung annehmen lässt, dann in dieser gewölbten Form durch ein Haltemittel gehalten wird.

21. Verfahren nach einem der vorstehenden Verfahrensansprüche, **dadurch gekennzeichnet, dass** das Wölben zwischen 10 und 120 Sekunden dauert.

22. Verfahren nach einem der vorstehenden Verfahrensansprüche, **dadurch gekennzeichnet, dass** die Isolierverglasung gleichzeitig gemäß zwei unterschiedlichen Richtungen gewölbt wird.

23. Verfahren nach einem der vorstehenden Verfahrensansprüche, **dadurch gekennzeichnet, dass** die Isolierverglasung vor dem Wölben flach ist.

## Claims

1. A glazed module comprising a metal framework and a cold-bent insulating glazing, said insulating glazing comprises a water-tight barrier, the metal framework and the insulating glazing being rendered integral by a holding means which forces the insulating glazing to retain the bent shape conferred on it by the framework.

2. The module as claimed in either of the preceding claims, **characterized in that** the insulating glazing comprises a laminated glazing comprising glass substrates separated by an interlayer made of polymer material, in particular a PVB.

3. The module as claimed in one of the preceding claims, **characterized in that** the insulating glazing comprises two laminated glazings separated by a gas-filled cavity.

4. The module as claimed in one of the preceding claims, **characterized in that** at least one glass substrate of the insulating glazing comprises a tempered glass sheet.

5. The module as claimed in one of the preceding claims, **characterized in that** the insulating glazing has a main face with an area of greater than 3 m², indeed even of greater than 4 m², indeed even of greater than 5 m².

6. The module as claimed in one of the preceding claims, **characterized in that** the insulating glazing is bent in order for its surface to exhibit, at at least one point, a radius of curvature of between 5 and 20 m in at least one direction.

7. The module as claimed in claim 1, **characterized in that** the insulating glazing is composed of glass substrates each comprising a single glass sheet which are separated by a gas-filled cavity and does not comprise a laminated glazing.

8. A process for the preparation of a glazed module of one of claims 1 to 6, the insulating glazing being cold-bent by a force which causes it to take the shape of the metal framework and then held in this bent shape by a holding means.

9. The process as claimed in the preceding claim, **characterized in that** the bending is carried out at less than 30°C.

10. The process as claimed in the preceding claim, **characterized in that** the bending is carried out at less than 28°C.

11. The process as claimed in one of the preceding process claims, **characterized in that** the bending is carried out at more than 0°C.

12. The process as claimed in one of the preceding process claims, **characterized in that** the bending is carried out while the insulating glazing is at the same temperature as the ambient air.

13. The process as claimed in claim 9, **characterized in that** the insulating glazing comprises a laminated glazing comprising glass substrates which are separated by an interlayer made of polymer material, in particular a PVB.

14. The process as claimed in the preceding claim, **characterized in that** the bending is carried out while the interlayer is at a temperature of between 30 and 80°C.

15. The process as claimed in the preceding claim, **characterized in that** the bending is carried out while the interlayer is at a temperature of between 40°C and 75°C.

16. The process as claimed in one of the three preceding claims, **characterized in that** the interlayer is at a temperature greater than its glass transition temperature during the bending.

17. The process as claimed in one of claims 13 to 16, **characterized in that** the insulating glazing is heated in order to obtain the bending temperature, the heating being carried out by juxtaposing a heating element with it, in particular a heating blanket.

18. The process as claimed in claim 13, **characterized in that** the bending is carried out at ambient temperature.

19. The process as claimed in one of claims 13 to 18, **characterized in that** the insulating glazing is bent in order for the shear stress at the interfaces between the interlayer made of polymer material and the glass substrates which are juxtaposed with it to be less than 3 MPa at 20°C.

20. A process for the preparation of a glazed module of claim 7, the insulating glazing being cold-bent by a force which causes it to take the shape of the metal framework and then held in this bent shape by a holding means.

21. The process as claimed in one of the preceding process claims, **characterized in that** the bending lasts between 10 and 120 seconds.

22. The process as claimed in one of the preceding process claims, **characterized in that** the insulating glazing is bent simultaneously along two different directions.

23. The process as claimed in one of the preceding process claims, **characterized in that** the insulating glazing is flat before being bent.
